# EUROPEAN PATENT APPLICATION

(11) **EP 0 871 100 A2**
(43) Date of publication of application: **14.10.1998**
(21) Application number: 98105980.1
(22) Date of filing: 01.04.1998
(51) Int. Cl.: G05B 19/4097

(54) **Automatic nesting apparatus**

(30) Priority: 11.04.1997 JP 93338/97
(71) Applicant: Murata Kikai Kabushiki Kaisha, Minami-ku, Kyoto-shi, Kyoto 601 (JP)
(72) Inventor: Shibano, Ryozo, Tajimi-shi, Gifu (JP)
(74) Representative: Liedl, Christine, Dipl.-Chem.

(57) **Abstract**

To simplify the shape of a surplus material region to improve the reuse value of the surplus material. An apparatus for determining the locations of multiple products w relative to a rectangular work W comprises the following means. The apparatus includes a work information storage means 1 for storing the shape and size of a work W and a product information storage means 2 for storing the shape and size of each of multiple products w. The apparatus also includes a temporary work setting means 3 for setting the range of the work w as temporary works W1, W2■■■. within a rectangular region sharing one side of the work W. The apparatus also includes a determination means 4 for determining the locations of the products w relative to the temporary works W1, W2■■■.

## Description

### Field of the Invention

The present invention relates to an automatic nesting apparatus for a plate processing machine such as a laser beam machine or a punch press machine. The automatic nesting apparatus is used in automatically generating a processing program.

### Background of the Invention

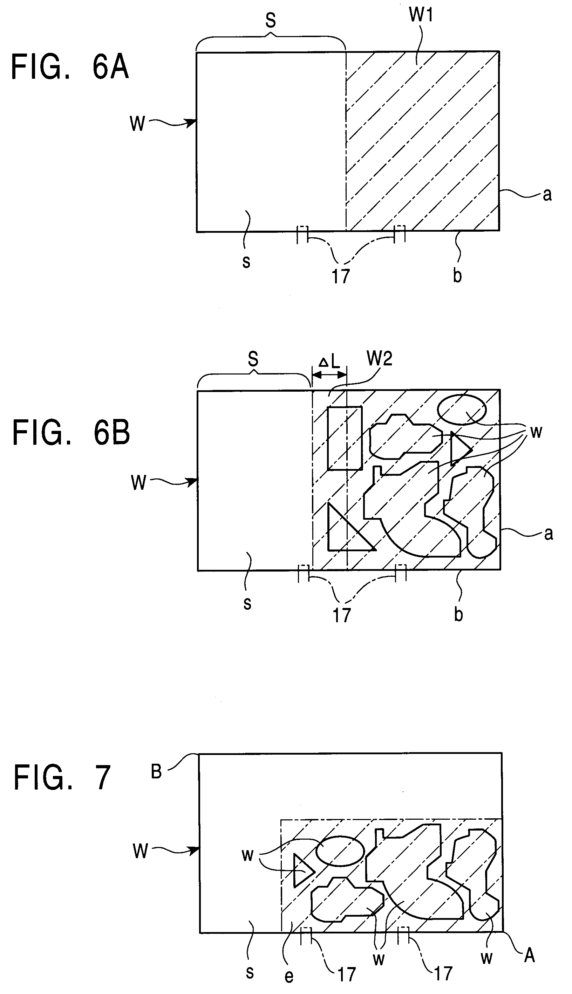

If multiple products are cut out from a work of a specified size, they are laid out as closely as possible, that is, nesting is carried out to reduce the wastage of the work. Conventionally, the work is rectangular, and if automatic nesting is executed for such a rectangular work, one corner of the work W is generally specified as a nesting reference position A and products w are laid out as closely as possible from the reference position A toward a corner B in a diagonal direction, as shown in Figure 7. That is, the layout range of the products w is extended from the reference position A in the directions of two sides a and b of the rectangular work W.

The nesting process sequentially creates a layout pattern of multiple products for multiple works to provide multiple (types of) layout patterns. In particular, in the last pattern to be created, the products w to be laid out are few, so the region that remains as surplus material s after the products w have been cut out from the work W is large, as shown in figure 7. Reuse of the surplus material s is desirable.

The conventional nesting method, however, leaves an L-shaped surplus material region after the products w have been cut out from a region e (shown by chain lines). Since the surplus material s is L-shaped, it is difficult to process or handle during reuse and thus cannot be reused effectively even though it accounts for a large proportion of the work W.

This invention is provided to solve the above problem, and its first object is to provide an automatic nesting apparatus that can simplify the shape of the surplus material region to improve the reuse value of the surplus material.

It is another object of this invention to minimize the size of a region for nesting in order to increase the area of the surplus material region.

It is yet another object of this invention to realize the effect of increasing the surplus material region while reducing the time required for nesting.

### Summary of the Invention

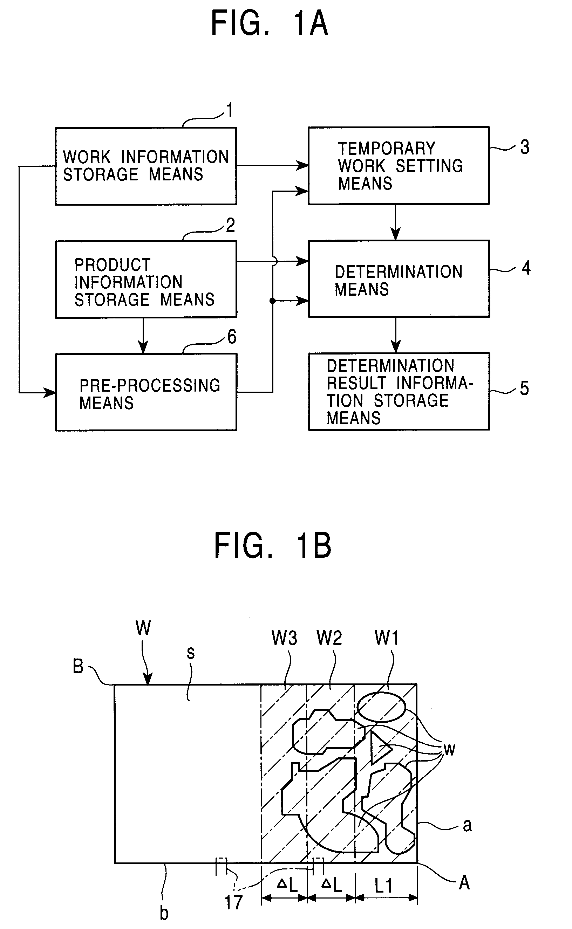

The configuration of this invention is described with reference to Figure 1, which corresponds to an embodiment. This automatic nesting apparatus determines the locations of multiple products w relative to a rectangular work w and includes the following components.

This automatic nesting apparatus comprises awork information storage means 1 for storing the shape and size of a work W, a product information storage means 2 for storing the shape and size of each of multiple products w, a temporary work setting means 3 for setting, within the range of the rectangle w, a rectangular region sharing one side a of the rectangle, as temporary works W1, W2■■■, and a determination means for determining the locations of the multiple products w relative to the temporary works W1, W2■■■.

This configuration sets the rectangular region sharing one side a of the work W as the temporary works W1, W2■■■. Then, the locations of the products w are determined relative to the temporary works W1, W2■■■. Thus, the surplus material region S that is other than the product peripheral region of the work w is shaped like a rectangle. Thus, the surplus material can be reused easily.

When, as a result of the processing of the temporary works W1, W2■■■ by the determination means 4, some of the multiple products w cannot be laid out, the temporary work setting means 3 enlarges the rectangular region used as the temporary works W1, W2■■■, in a direction perpendicular to one side a of the work w, and the determination means 4 again determines the locations of the multiple products w relative to the enlarged temporary works W1, W2■■■.

In this manner, the determination means 4 realizes the trial layout of the locations of the products w by enlarging the temporary works W1, W2■■■ starting from a small region, so the area of the region used for nesting can be minimized to increase the area of the surplus material region.

If the trial layout of the products by the determination means 4 and the processing for enlarging the region used as the temporary works W1, W2■■■ when the products cannot be laid out are repeated several times, the work setting means 3 increments the size of the region by a constant value ΔL.

By setting the incremental size ΔL at a constant value in this manner, the mathematical operations required to enlarge the region, and thus the required programs, are simplified. As a result, the nesting time is reduced.

### Brief Description of the Drawings

Figure 1A is a block diagram showing a conceptual configuration of an automatic nesting apparatus according to one embodiment of this invention. Figure 1B is an explanatory drawing showing the relationship between a work, a temporary work, and products in this apparatus.

Figure 2A is a flow chart showing the entire flow of the automatic nesting apparatus. Figure 2B is a flow chart showing the details of a preprocessing step in the flow chart.

Figure 3 is an explanatory drawing of a nesting method executed by the automatic nesting apparatus.

Figure 4 is a block diagram of a hardware configuration of an automatic programming apparatus including the automatic nesting apparatus.

Figure 5 is an explanatory drawing of a nesting method executed by an automatic nesting apparatus according to another embodiment of this invention.

Figure 6 is an explanatory drawing of a nesting method executed by an automatic nesting apparatus according to yet another embodiment of this invention.

Figure 7 is an explanatory drawing of a conventional nesting method.

### Datailed Description of the Preferred Embodiments

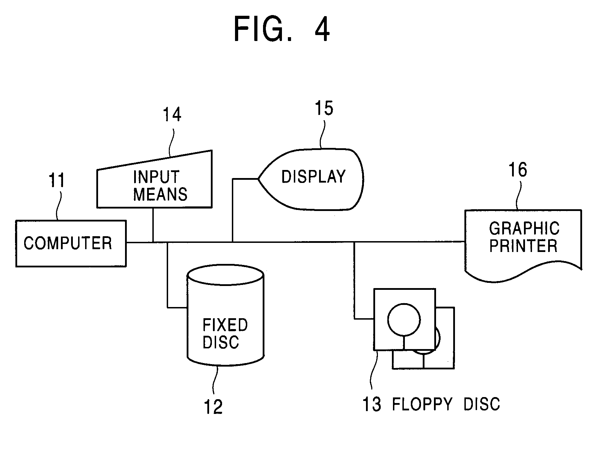

One embodiment of this invention is described with reference to Figures 1 to 4. Figure 4 is a block diagram showing a hardware configuration of an automatic programming apparatus including an automatic nesting apparatus according to this invention.

A storage means including a fixed disc device 12, a floppy disc device 13 and so on, an input means 14 including a keyboard, a mouse and so on, and an output means including a display 15, a graphic printer 16 and so on, are connected to a computer 11. The computer 11 includes an internal storage device in addition to a central processing unit, and the internal storage device or the fixed disc device 12 stores programs and data constituting the automatic programming apparatus and automatic nesting apparatus.

The automatic programming apparatus automatically generates a processing program consisting of an NC program for a plate processing machine such as a laser beam machine or a punch press machine. The automatic nesting apparatus is configured as part of the function of the automatic programming apparatus or as an independent function.

The automatic nesting apparatus in Figure 1B determines the locations of multiple products w that are cut out from the rectangular work W. Figure 1A shows a block diagram representing a conceptual configuration of this apparatus.

As shown in Figure 1, the automatic nesting apparatus comprises a work information storage means 1 for storing the shape and size of the work W, a product information storage means 2 for storing the shape and size of the multiple products w, a temporary work setting means 3 for setting, within the range of the rectangle constituting the outline of the work W, a rectangular region sharing one side a (in this example, the short side on the right of this figure) of the rectangle w, as temporary works W1, W2■■■, and a determination means 5 for determining the locations of the multiple products w relative to the temporary works W1, W2■■■ In addition to these components, a determination result information storage means 5 for storing the results obtained by the determination means 4, and a pre-processing means 6 are provided. Since this embodiment executes nesting for cut-out processing, the locations of the products w relative to the work W indicate the processing locations of the products w.

The work information storage means 1 and the product information storage means 2 store information on the work W and the products w, respectively, that are to be nested.

Given information on the shapes and sizes of any rectangular work W and each product w, the determination means 4 sets a specified corner of the outline of the work W as a reference position A and lays out the products w as closely as possible from the reference position A toward a corner B in a diagonal direction of the work W. The determination means 4 indicates that the layout is impossible if some of the specified multiple products w cannot be fitted into the work W. When information on the shape and size of the temporary works W1, W2■■■ instead of on the actual work W is input, the determination means 4 determines the locations of the products w relative to the temporary works W1, W2■■■ or indicates that the layout is impossible, as in the case of the actual work W.

In addition, if nesting is carried out for sheeting with a punch press in which the work W is processed while being gripped by a work holder 17, the determination means 4 lays out the products w as closely as possible while avoiding the layout of the work holder 17. The determination result information storage means 5 stores the results of the locations determined by the determination means 4.

The temporary work setting means 3 sets an initial value for the temporary work, that is, a region for a first temporary work W1 depending on the shape and size of the work W. When, as a result of the nesting of the temporary work W1 by the determination means 4, some of the multiple products w cannot be laid out, the temporary work setting means 3 increases the size of the rectangular region up to a second temporary work W2. In this case, the region is enlarged in the direction perpendicular to one side a that is used as a reference for the work W (the direction along a long side b). In addition, the incremental size ΔL by which the temporary work is sequentially enlarged to W1, W2, W3■■■ is set at a constant value in this example. The incremental size ΔL may be large, for example, 10 cm or may be set in a smaller unit such as 1 mm or 10 mm.

The pre-processing means 6 executes a specified process before the temporary work W1 is set. It allows the determination means 4 to directly lay out the products w within the work W and if a specified yield or more can be obtained, it completes the nesting process without setting the temporary work W1.

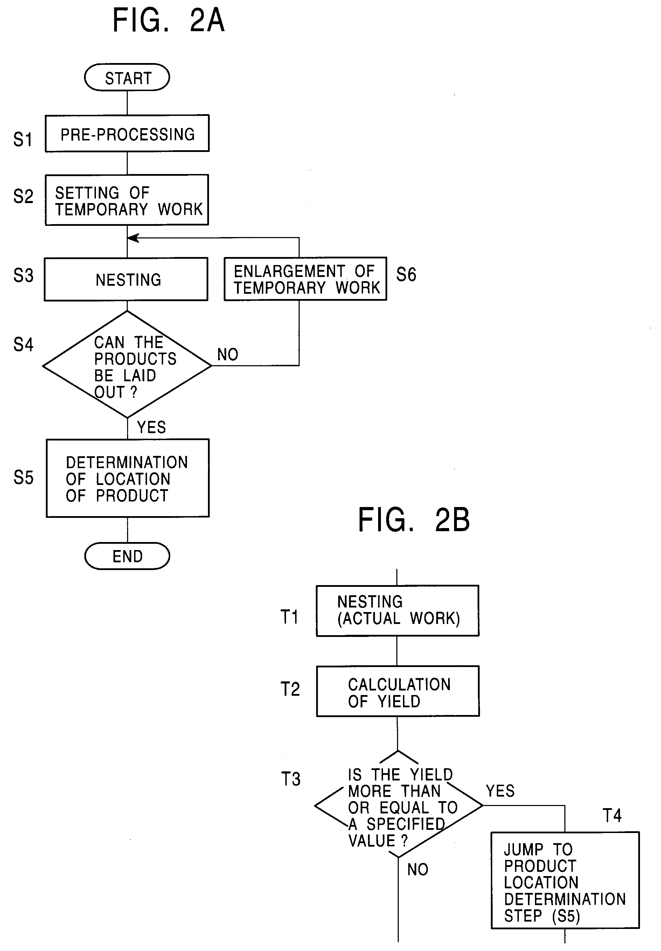

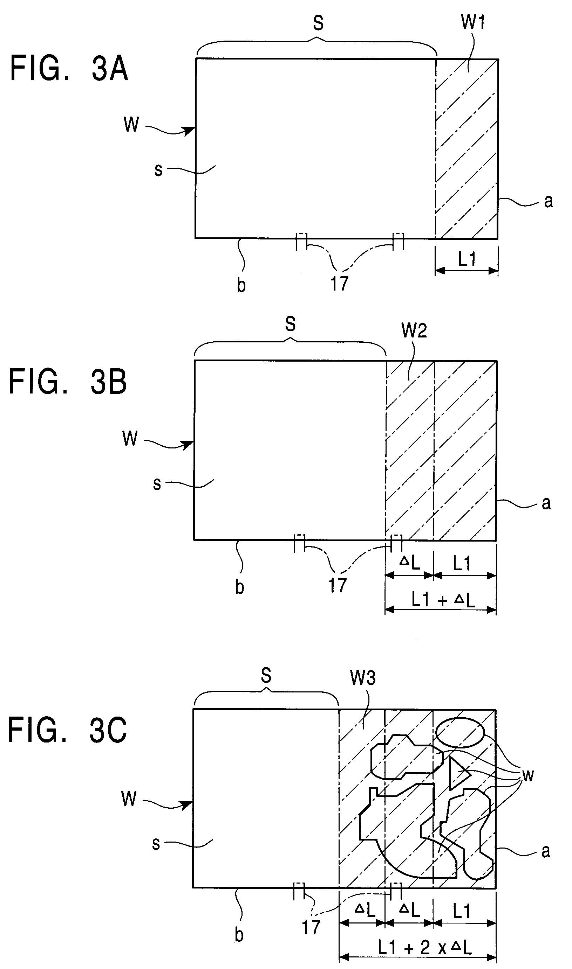

Next, a nesting method using this automatic nesting apparatus is described with reference to Figures 2 and 3. Figure 2A shows the entire process of this nesting method and Figure 2B shows the details of pre-processing for this process.

Before nesting is started, at pre-processing step S1, the determination means 4 carries out nesting for the overall work W, that is, it lays out the products w as closely as possible within the work W (step T1 in Figure 2B). The yield of the nesting process is calculated (T2), and if it is higher than or equal to a specified value, that is, if the part that can be used as surplus material is smaller than the specified value, the process directly jumps (T3, T4) to a product location determination step S5 as shown in Figure 1A to determine the locations of the products w relative to the work w.

In general, the nesting process sequentially creates for multiple works w a layout pattern of multiple products w that cannot be laid out within a single work W in order to provide multiple (types of) layout patterns. Thus, except for the last pattern to be created, the nesting process generally jumps to the product location determination step S5 from the pre-processing step S1 when the yield reaches the specified value or more. The following nesting process is executed for the last pattern to be created.

If the process determines during the pre-processing step that the yield does not meet the specified value, a setting process of the temporary work (S2) is done. This process sets, within the range of the rectangular work W, a rectangular region (indicated by chain lines) sharing one side (in this case, a short side) a of the rectangle that is used as a determination reference, as the temporary work W1, as shown in Figure 3A. In other words, the overall area of the rectangular work W is divided in the longitudinal direction and a specified width L1 at one end of the work W is set as the temporary work W1.

The determination means 4 executes a product layout process (nesting) for the set temporary work W1 (step S3 in Figure 2). This product layout process lays out the products as closely as possible in a diagonal direction of the temporary work W1 starting from the reference position A in a corner of the work. If all products w can be laid out, the process proceeds to the subsequent product location determination process (S5 in Figure 2). Otherwise, the process passes to a temporary work enlargement step (S6) to set the temporary work W2 (the shaded part in Figure 3B) that is obtained by increasing the size of the temporary work region by a specified incremental length ΔL1. The determination means 4 again executes nesting for the enlarged temporary work W2 (S3). If all products w can be laid out in the enlarged temporary work W2, the process transfers to the subsequent product location determination step (S5 in Figure 2). Otherwise, it returns to the temporary work enlargement step (S6) to set the temporary work W3 (the shaded part in Figure 3C) that is obtained by further increasing the size of the temporary work region by the specified incremental length ΔL1. The products w shown in Figure 3C can all be laid out within the temporary work W3 of this size.

In this manner, the process of incrementing the size of the temporary works W1, W2, W3■■■ by a constant value ΔL1 and the nesting for the set temporary works W1, W2, W3■■■ are repeated. Once it has become possible to lay out all products w, the product location determination step (S5) determines the corresponding locations of the products w, and while storing this result of the layout of the products, recovers the actual work W instead of the temporary works W1, W2, W3■■■ and allows the determination result information storage means 5 to store this result of the nesting for the actual work W.

Since this automatic nesting apparatus sets, within the region of the work W, a rectangular region sharing one side a of the work W as the temporary works W1, W2■■■ and determines the locations of the products w relative to the temporary works W1, W2■■■, the surplus material region S is rectangular and can be reused easily. Consequently, the reuse value of the surplus material can be improved.

In addition, if the products cannot be laid out within the temporary works W1, W2■■■, the rectangular region of the temporary work is gradually enlarged toward a long side of the work W to repeat the trial product layout process. The region for nesting can be minimized to increase the size of the surplus material region S.

In addition, since the size of the temporary works W1, W2■■■ is incremented by a constant value ΔL, relevant mathematical, operations are simplified, which reduces, the time required for nesting.

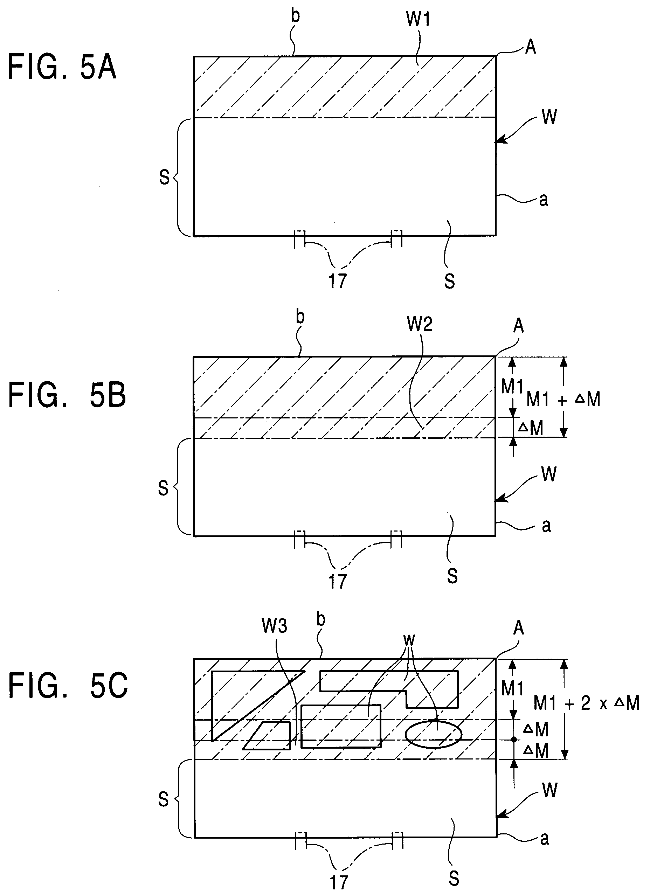

Although the above embodiment enlarges the temporary works W1, W2■■■ toward the long side b using the short side a as a reference, the determination means 4 in Figure 1 may execute nesting by extending the temporary works W1, W2■■■ toward the short side a using the long side b as the reference, as shown in Figures 5A to 5C. In particular, if the longer side in all products w for nesting is longer than the short side a of the work W or is longer than half the long side b of the work W, it is desirable that nesting be carried out using the long side b as the reference. In this case, the long side b used as the reference is set opposite to the long side gripped by the work holder 17 of a plate processing machine such as a punch press. Thus, the surplus material s can be used effectively even if elongated products w are obtained, and in addition to the region gripped by the work holder 17, the size of the surplus material s can be increased. In Figure 5, M is the length of the short side of the work, M1 is the length of the temporary work W1, and ΔM is an incremental size.

Although each of the above embodiments extends the range of the temporary works W1, W2■■■ from the one side a or b of the work W, the determination means 4 in Figure 1 may execute nesting by setting as the first temporary work region W1 one of two regions obtained by dividing the work W at its center line parallel with the one side a, as shown in Figure 6A, and incrementing the size the temporary works W1, W2■■■ by the specified value ΔL if the products w cannot be laid out. In this case, if the yield does not reach a specified value using the first temporary work W1, the temporary work may be sequentially enlarged starting from the one side a of the work W as in the example in Figure 3.

Figure 6 shows the process executed using the short side a as the nesting reference, but even if the long side b is used as the nesting reference as shown in the example in Figure 5, it is possible to use the method that sets as the first temporary work region one of two regions obtained by dividing the work at its center line parallel with the one side (the long side) b and sequentially enlarging the temporary work, as described above, and also enlarging the temporary work starting from the one side b if the yield is insufficient.

The automatic nesting apparatus according to this invention includes the temporary work setting means for setting as the temporary work a rectangular region sharing one side of the work and the determination means for determining the locations of the multiple products relative to the temporary work. Thus, the shape of the surplus material region can be simplified to improve the reuse value of the surplus material.

If the temporary work setting means enlarges the rectangular region used as the temporary work, in the direction perpendicular to one side of the temporary work if the determination has failed to lay out the products within the temporary work, the region for nesting can be minimized to increase the surplus material region.

In addition, if the incremental size by which the temporary work region is enlarged is constant, relevant mathematical operations are simplified, which reduces the time required for nesting.

## Claims

1. An automatic nesting apparatus for determining the locations of multiple products relative to a rectangular work, characterized in that the apparatus comprises a work information storage means for storing the shape and size of a work, a product information storage means for storing the shape and size of each of the multiple products, a temporary work setting means for setting, within the range of the rectangle constituting the outline of the work, a rectangular region sharing one side of the rectangle, as a temporary work, and a determination means for determining the locations of the multiple products relative to the temporary work.

2. An automatic nesting apparatus as in claim 1 characterized in that when, as a result of the processing of the temporary work by the determination means, some of the multiple products cannot be laid out, the temporary work setting means enlarges the rectangular region used as the temporary work, in a direction perpendicular to the one side of the work, and in that the determination means again determines the locations of the multiple products relative to the enlarged temporary work.

3. An automatic nesting apparatus as in claim 2 characterized in that if the processing by the determination means and the processing for enlarging the region used as the temporary work when the products cannot be laid out are repeated several times, the work setting means increments the size of the region by a constant value.
